Europäisches Patentamt

**European Patent Office**

Office européen des brevets

(11) Publication number: **0 043 188**
**B1**

(12) **EUROPEAN PATENT SPECIFICATION**

(45) Date of publication of patent specification: **12.09.84**

(21) Application number: **81302496.5**

(22) Date of filing: **05.06.81**

(51) Int. Cl.³: **F 16 K 47/04, F 16 K 5/12**

(54) Method of attenuating fluid flow passing through a valve and a valve therefor.

(30) Priority: **27.06.80 FI 802046**

(43) Date of publication of application:
**06.01.82 Bulletin 82/01**

(45) Publication of the grant of the patent:
**12.09.84 Bulletin 84/37**

(84) Designated Contracting States:
**AT DE FR GB IT NL SE**

(56) References cited:
**EP-A-0 013 601**
**BE-A- 806 674**
**DE-A-2 359 717**
**DE-A-2 654 769**
**US-A-4 212 321**

(73) Proprietor: **NELES OY**
**PL 4**
**SF-00811 Helsinki 81 (FI)**

(72) Inventor: **Polon, Juhani**
**Hakolantie 15 D**
**SF-00200 Helsinki 20 (FI)**

(74) Representative: **Kerr, Simonne June et al**
**European Patent Attorney POTTS, KERR & CO.**
**13 High Street**
**Windsor Berkshire SL4 1LD (GB)**

Courier Press, Leamington Spa, England.

## Description

The present invention concerns a method of attenuating fluid flow passing through a valve provided with a flow passage, and a rotatable closure member having a bore for fluid passage therethrough, whereby attenuation of the fluid flow occurs in both flow directions inside the bore and whereby the attenuating effect is increased as the valve is being closed and is reduced as the closure member is rotated towards the open position.

Such a method is known from DE—A—2 359 717 which relates to a valve with a plate provided with holes and positioned perpendicularly to the closing member. The flow opening of the valve can be adjusted only within a certain opening angle range, the rest of the turning of the closure member only redirects the flow without changing the flow opening.

EP—A—13601 (priority FI 10.1.79, published 23.7.80), which discloses a valve with a flow control device fitted in the flow opening. The direction of the flow control plate is the same as the direction of the axis of the opening. The attenuating effect is increased as the valve is being closed and is reduced as the valve is being opened.

In contrast in the present invention, the flow path of the fluid within the bore becomes longer by increasing the number of consecutive changes in direction of the flow within the bore. There are several pressure reductions when the opening angle of the valve is small. These pressure reductions restrict the flow velocity efficiently. When the flow velocity is low, the noise created remains reasonable. The plates used for the flow control can be whole, it is not necessary to provide them with holes. When the plates are whole, fluid medium with long fibres will not block the holes and change the choking properties of the plates.

According to the present invention a method of attenuating fluid flow is characterised in that when the valve is being closed, the flow path of the fluid within the bore becomes longer by increasing the number of consecutive changes in direction of the fluid flow within the bore.

The invention also comprises a valve for putting this method into practice.

The invention will now be described further, by way of example with reference to the accompanying drawings, in which:—

Fig. 1 is a side view of a ball valve, the valve body being in section in the longitudinal direction of the flow passage;

Fig. 2 is a corresponding longitudinal cross section through the middle of the flow passage;

Fig. 3 is a view similar to Fig. 2 but with different positioning of the attenuator plates; and

Fig. 4 is a view similar to Fig. 2 but with a different attenuator plate construction.

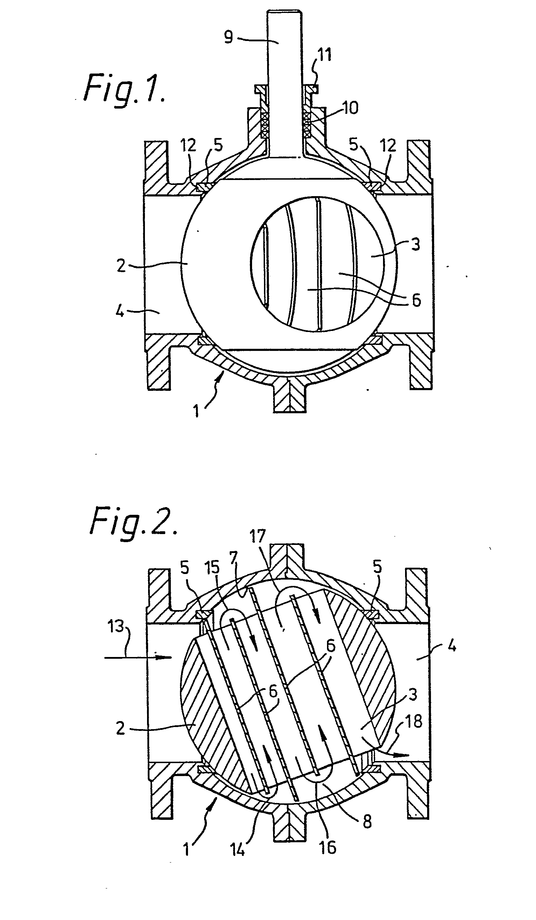

The valve shown in Figs. 1 and 2 comprises a valve body 1 and a spherical valve closure member 2 fitted therein. A bore 3, extending through the closure member 2, has the same cross-sectional area as that of a flow passage 4 for the fluid in the valve body 1 at both sides of the closure member 2; the cross-sectional of the passage 4 is circular. In Figs. 1 and 2 the valve is in the almost closed position, whereby the bore 3 is correspondingly almost transversal to the flow passage 4.

The closure member 2 has an integral stem 9, which latter passes through a sealing device in the valve body 1, which seal comprises a gland packing 10 and a gland 11. When the gland 11 is pressed into the valve body 1 structure by means of bolts or the like, the gland packing 10 placed around the stem 9 is pressed between this latter and the valve body 1.

Annular recesses 12, provided in the body 1 transversal to the flow passage 4, at both sides of the closure member 2, into which seating rings 5 are fitted.

A fluid flow attenuating device is fitted in the bore 3 of the closure member 2, which device consists of a plurality of spaced apart parallel attenuator plates 6 permanently fixed in the bore 3. The surfaces of the attenuator plates 6 are plain and without apertures and one end 7 of each of which extends to or very near to the surface of rotation of the closure member 2 to prevent fluid flow between the body 1 and the plate end 7; the opposite end of each corresponding plate 6 does not extend to the surface of rotation whereby a fluid flow passage 8 of desired size is formed between the body 1 and the plate 6. In the valve in Figs. 1 and 2 the ends of the attenuator plates 6 have been arranged so that they extend alternately at both ends of the bore 3 in the closure member 2 to or very near to the plane of the surface of rotation of the closure member 2.

As shown in Figs. 1 and 2, the valve is very slightly opened, whereby the fluid flow from the direction indicated by the arrow 13 must, due to the position of the first attenuator plate in the flow direction, fluid in a passage between the wall of the bore 3 in the closure member 2 and the first attenuator plate 6, from where it flows further, in the direction indicated by the arrow 14, between the first and the second attenuator plate 6 and along the flow path indicated by the arrows 15, 16, 17 and 18. When the closure member 2 is rotated to open further, the fluid no longer has to circulate back and forth around all the attenuator plates 6 but can at least partly by-pass one or several attenuator plates 6. Thus, in the bore in or through the closure member 2 the length of the fluid flow path is increased and the direction of the fluid flow is alternated so that the more the valve is closed, the longer becomes the fluid flow path in the bore 3 in the closure member 2 and, correspondingly, the higher becomes the number of alternations of direction of the fluid flow within the range of the bore 3 in the closure member 2.

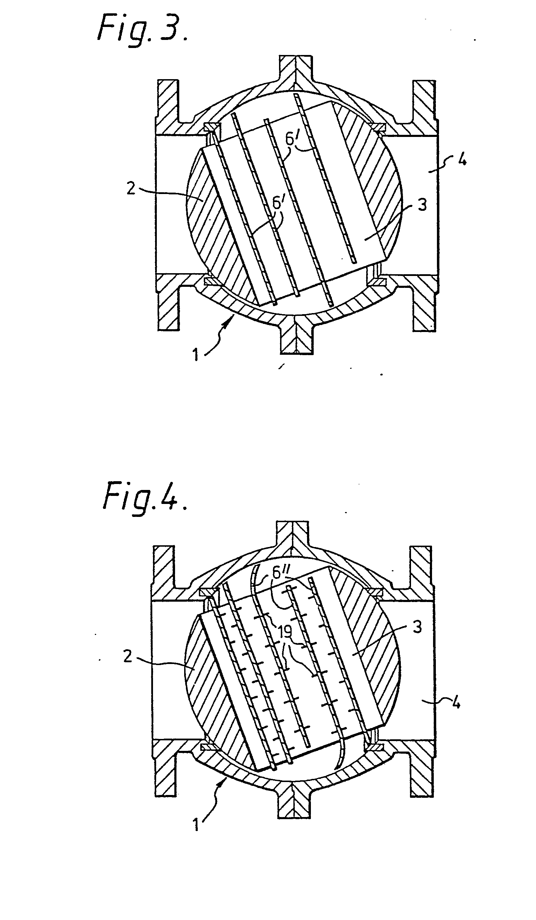

In the embodiment shown in Fig. 3 the attenuator plates 6' have been placed in the bore 3 in the closure member 2 so that the first, the second, and the fourth attenuator plate 6' extend, at the same ends of the plates to the proximity of the surface of rotation of the closure member 2 and correspondingly do not so extend at their opposite ends. The third attenuator plate 6' however is positioned so that it extends to the proximity of the surface of rotation of the closure member at the end of the bore 3 in the closure member 2 at which the other attenuator plates 6' allow a flow passage to remain between the body 1 and their ends; the opposite end of the third attenuator plate 6' does not extend to the proximity of the surface of rotation of the closure member 2.

In the embodiment shown in Fig. 4, the attenuator plates 6" have been positioned further in a way differing from the above and comprise obstacle plates 19, transverse to the flow passage formed by the attenuator plates, arranged on the surfaces thereof of the attenuator alternately on opposite walls of the flow passages. Moreover, the two attenuator plates 6" in the middle are curved at their ends to extend further so as to guide the streaming of the fluid flow.

The attenuator plates 6, 6' and 6" are preferably placed in such a way that they are closer to each other at the inlet side of the fluid flow and more distant from each other at the outlet side so that the cross-sectional area of the longest fluid flow path passing through the closure member 2, that is of the flow path that is formed when the valve is only slightly open, increases in the direction of flow.

## Claims

1. A method of attenuating fluid flow passing through a valve (1) provided with a flow passage (4) and a rotatable closure member (2) having a bore (3) for fluid passage therethrough, whereby attenuation of the fluid flow occurs in both flow directions inside the bore (3) and whereby the attenuating effect is increased as the valve (1) is being closed and is reduced as the closure member (2) is rotated towards the open position, characterized in that, when the valve is being closed, the flow path of the fluid within the bore (3) becomes longer by increasing the number of consecutive changes in direction of the fluid flow within the bore (3).

2. A method as claimed in claim 1, characterized in that the fluid flow is guided so that it flows several times back and forth in the longitudinal direction of the bore (3) through the closure member (2) with small opening angles of the valve, and the number of back and forth reversals of direction of the fluid flow decreases or becomes zero when the valve is opened further.

3. A valve for attenuating flow fluid passing therethrough according to the method of claims 1 or 2, comprising a body (1) provided with a flow passage (4), a closure member (2) provided with a bore (3) extending therethrough and being rotatably positioned in the valve body (1), as well as seats (5) fitted between the closure member (2) and the body (1), the closure member (2) being provided with a stem (9), which is mounted perpendicularly to the longitudinal direction of the flow passage (4) and passed through the valve wall to the outside thereof with the aid of a gland (11) provided with gland packing (10), and a device being fitted in the bore (3) which attenuates the fluid flow passing through the valve in both directions, the device comprising a plurality of spaced apart parallel attenuator plates (6, 6', 6") permanently fastened to the bore (3) in the closure member (2) characterised in that one of the ends of at least one of the attenuator plates (6, 6', 6") which are without apertures and are located substantially parallel to the longitudinal axis of said flow passage (4) is fitted so that it extends to or very near to the surface of rotation of the closure member so as to prevent flow between the body (1) and the end of the attenuator plate (6, 6', 6") whilst the opposite end of each plate (6, 6', 6") does not extend to the proximity of the surface of rotation whereby a flow passage of desired size is formed between the body (1) and the plate (6, 6', 6") for the fluid flow.

4. A valve as claimed in claim 3, characterised in that the ends of the attenuator plates (6, 6', 6") are fitted alternately at both ends of the bore (3) in the closure member (2) so as to extend to or very near to the surface of rotation of the closure member (2) and that the corresponding opposite ends of the attenuator plates (6, 6', 6"), do not so extend to the surface of rotation of the closure member (2).

5. A valve as claimed in claim 3, characterised in that obstacle plates (19) transverse to the flow passage formed by the attenuator plates are arranged on the surfaces of the attenuator plates (6") and are disposed alternately on both opposite walls of a flow passage.

## Patentansprüche

1. Verfahren zur Drosselung des Durchflusses eines Strömungsmittels durch ein Ventil (1) mit einem Durchflußkanal (4) und einem drehbaren Verschlußkörper (2), der eine Bohrung (3) für den Durchtritt des Stroemungsmittels aufweist, wobei die Drosselung des Strömungsmittelflusses in beiden Fließrichtungen innerhalb der Bohrung (3) erfolgt und der Drosselungseffekt beim Schließen des Ventils (1) verstärkt und beim Drehen in Richtung zur Offenstellung des Verschlußkörpers (2) reduziert wird, dadurch gekennzeichnet, daß, wenn das Ventil geschlossen wird, der Strömungsweg des Strömungsmittels innerhalb der Bohrung (3) durch Erhöhung der Anzahl der aufeinanderfolgenden Richtungswechsel des Flusses des Strömungsmittels innerhalb der Bohrung (3) verlängert wird.

2. Verfahren nach Anspruch 1, dadurch gekennzeichnet, daß der Fluß der Strömungsmittelfluß derart geleitet wird, daß er mehrmals in Längsrichtung der Bohrung (3) durch den Verschlußkörper (2) bei kleinen Öffnungswinkeln des Ventils zurück und nach vorne strömt und daß die Anzahl der Umkehrungen zurück und nach vorne der Fließrichtungen bei weiterem Öffnen des Ventils abnimmt oder Null wird.

3. Ventil zur Drosselung des Durchflusses eines Strömungsmittels zur Durchführung des Verfahrens nach den Ansprüchen 1 oder 2, mit einem Ventilgehäuse (1) mit einem Durchflußkanal (4), einem Verschlußkörper (2), der eine durch ihn verlaufende Bohrung (3) aufweist und drehbar im Ventilgehäuse (1) angeordnet ist, sowie Sitzen (5), die zwischen dem Verschlußkörper (2) und dem Ventilgehäuse (1) angeordnet sind, wobei der Verschlußkörper (2) mit einer Spindel (9) versehen ist, die senkrecht zur Längsrichtung des Durchflußkanals (4) montiert und durch die Ventilwand nach außen durch eine mit einer Stopfbüchsenpackung (10) versehene Stopfbüchse (11) geführt ist, und wobei in der Bohrung (3) eine den Fluß des Strömungsmittels durch das Ventil in beiden Richtungen drosselnde Vorrichtung angeordnet ist, die aus einer Vielzahl von im Abstand zueinander angeordneten Drosselplatten (6, 6', 6") besteht, welche permanent in der Bohrung (3) des Verschlußkörpers (2) befestigt sind, dadurch gekennzeichnet, daß eines den Enden von wenigstens einer der Drosselplatten (6, 6', 6"), welche keine Öffnungen aufweisen und im wesentlichen parallel zur Längsachse des genannten Durchflußkanals (4) liegen, derart angeordnet ist, daß es sich bis zur oder sehr nahe zur Drehfläche des Verschlußkörpers erstreckt, um einen Fluß zwischen dem Ventilgehäuse (1) und dem Ende der Drosselplatte (6, 6', 6") zu verhindern, wogegen das entgegengesetzte Ende einer jeden Platte (6, 6', 6") sich nicht bis in die Nähe der Drehfläche erstreckt, so daß ein Durchflußkanal gewünschter Größe zwischen dem Ventilgehäuse (1) und der Platte (6, 6', 6") für das fließende Strömungsmittel gebildet wird.

4. Ventil nach Anspruch 3, dadurch gekennzeichnet, daß die Enden der Drosselplatten (6, 6', 6") abwechselnd an beiden Enden der Bohrung (3) des Verschlußkörpers (2) derart angeordnet sind, daß sie sich bis zur oder nahe zur Drehfläche der Verschlußkörpers (2) erstrecken und daß die entsprechenden entgegengesetzten Enden der Drosselplatten (6, 6', 6") nicht bis zur Drehfläche der Verschlußkörpers (2) reichen.

5. Ventil nach Anspruch 3, dadurch gekennzeichnet, daß Hindernisplatten (19) quer zu dem durch die Drosselplatten (6") gebildeten Durchflußkanal vorgesehen und abwechselnd an den beiden gegenüberliegenden Wänden des Durchflußkanals angeordnet sind.

**Revendications**

1. Méthode pour atténuer l'écoulement d'un fluide traversant un obturateur (1) muni d'une conduite d'écoulement (4) et d'un élément de fermeture tournant (2) comportant un circuit d'écoulement du fluide (3), par lequel l'atténuation de l'écoulement du fluide s'effectue dans les deux directions d'écoulement à l'intérieur du circuit d'écoulement (3) et l'effet d'atténuation s'accroît aussi bien lorsque l'obturateur (1) se trouve en position fermée que lorsque l'élément de fermeture (2) est tourné vers la position ouverte, caractérisée en ce que, quand l'obturateur (1) est en position fermée, le passage du fluide à l'intérieur du circuit (3) s'allonge par accroissement du nombre des changements consécutifs de direction de l'écoulement du fluide à l'intérieur du circuit (3).

2. Méthode selon la revendication 1, caractérisée en ce que l'écoulement du fluide est guidé de façon à ce que l'écoulement va et vient plusieurs fois dans la direction longitudinale du circuit (3) à travers l'élément de fermeture (2) avec de faibles angles d'ouverture de l'obturateur, et en ce que le nombre d'allée et venue de la direction de l'écoulement du fluide décroît ou tend vers zéro lorsque l'obturateur s'ouvre davantage.

3. Obturateur pour atténuer l'écoulement d'un fluide le traversant selon la méthode des revendications 1 ou 2, comprenant un corps (1) muni d'un passage d'écoulement (4), un élément de fermeture (2) muni d'un circuit (3) s'étendant à travers lui et étant positionné à rotation dans le corps de l'obturateur (1), des sièges (5) étant de même positionnés entre l'élément de fermeture (2) et le corps (1), l'élément de fermeture (2) étant muni d'une tige (9) laquelle est montée perpendiculairement à la direction longitudinale du passage d'écoulement (4), passe à travers la paroi de l'obturateur et s'étend à l'extérieur de cette dernière grâce à une bague (11) munie d'une couronne (10), un dispositif étant disposé dans le circuit (3) lequel atténue l'écoulement du fluide traversant l'obturateur dans les deux directions, le dispositif comportant une pluralité de lames atténuatrices parallèles espacées les unes des autres (6, 6', 6") fixées de façon permanente au circuit (3) dans l'élément de fermeture (2) caractérisé en ce qu'une des extrémités d'au moins une des lames atténuatrices (6, 6', 6") lesquelles ne comportent pas d'orifices et sont situées sensiblement parallèles à l'axe longitudinal dudit passage d'écoulement (4), est disposée de façon à s'étendre vers ou près de la surface de rotation de l'élément de fermeture de manière à empêcher l'écoulement entre le corps (1) et l'extrémité de la lame atténuatrice (6, 6', 6") tandis que l'extrémité opposée de chaque lame (6, 6', 6") ne s'étend pas vers la proximité de la surface de rotation par laquelle un passage d'écoulement de taille désirée est formé entre le corps (1) et la lame (6, 6', 6") pour l'écoulement du fluide.

4. Obturateur selon la revendication 3, caractérisé en ce que les extrémités des lames atténuatrices (6, 6', 6") sont disposées alternativement aux deux extrémités du circuit (3) dans l'élément de fermeture (2) afin de s'étendre vers ou très près de la surface de rotation de l'élément de fermeture (2) et en ce que les extrémités opposées correspondantes des lames atténuatrices (6, 6', 6") ne s'étendent pas vers la surface de rotation de l'élément de fermeture (2).

5. Obturateur selon la revendication 3, caractérisé en ce que des lames formant obstacle (19), transversales au passage d'écoulement, formé par les lames atténuatrices sont disposées sur les surfaces des lames atténuatrices (6") et alternativement sur les deux parois opposées du passage d'écoulement.

0 043 188

Fig.1.

Fig.2.

*Fig. 3.*

*Fig.4.*